# DEMANDE DE BREVET EUROPEEN

(11) **EP 4 574 551 A1**
(43) Date de publication de la demande: **25.06.2025**
(21) Numéro de dépôt: 24220049.1
(22) Date de dépôt: 16.12.2024
(51) Int. Cl.: B60L 53/67

(54) **PROCEDE DE SELECTION D'UN ALGORITHME DE PILOTAGE D'UNE INFRASTRUCTURE DE RECHARGE DE VEHICULES ELECTRIQUES**

(30) Priorité: 18.12.2023 FR 2314408
(71) Demandeur: Electricité de France, 75008 Paris (FR)
(72) Inventeur: PAYEN, Raphael, 92160 ANTONY (FR); BEAUDE, Olivier, 75014 PARIS (FR)
(74) Mandataire: Regimbeau

(57) **Abrégé**

L'invention concerne un procédé de sélection d'un algorithme de pilotage d'une infrastructure de recharge de véhicules électriques, parmi une pluralité d'algorithmes de pilotage prédéfinis, comprenant des étapes de :
a - simuler un pilotage de l'infrastructure de recharge selon chacun des algorithmes de pilotage en suivant un même scénario prédéfini d'activité de l'infrastructure de recharge sur une période de temps donnée, le scénario prédéfini d'activité comprenant la recharge d'un ou de plusieurs véhicules électriques, et pour chaque véhicule électrique une plage horaire de raccordement du véhicule électrique à l'une des bornes de l'infrastructure de recharge et une valeur d'un besoin en énergie électrique du véhicule électrique,
b - pour chaque algorithme de pilotage, calculer un indicateur de performance de l'algorithme de pilotage,
c - sélectionner l'un des algorithmes de pilotage parmi la pluralité d'algorithmes de pilotage prédéfinis, en fonction des indicateurs de performance calculés pour les différents algorithmes de pilotage.

## Description

### DOMAINE DE L'INVENTION

L'invention concerne les infrastructures de recharge de véhicules électriques. L'invention concerne plus particulièrement un procédé de sélection d'un algorithme de pilotage d'une infrastructure de recharge de véhicules électriques, et un procédé de pilotage d'une infrastructure de recharge de véhicules électriques, au moyen de l'algorithme sélectionné.

### ETAT DE LA TECHNIQUE

Certaines infrastructures de recharge de véhicules électriques (IRVE) comprennent une pluralité de bornes de recharge, chaque borne de recharge pouvant comprendre un ou plusieurs points de recharge, chaque point de recharge étant destiné à être raccordé à un véhicule électrique. Les bornes de recharge de certaines infrastructures de recharge peuvent être pilotées par un algorithme de pilotage qui permet d'attribuer à chaque point de recharge une consigne de puissance électrique, correspondant à la puissance électrique devant être délivrée par le point de recharge au véhicule électrique auquel il est raccordé.

Il existe des algorithmes de pilotage mettant en oeuvre des stratégies différentes, afin de fournir la meilleure qualité de service possible aux usagers de l'infrastructure de recharge.

Toutefois, les exigences de qualité de service peuvent varier en fonction des besoins des utilisateurs de l'infrastructure de recharge.

De plus, il n'est pas toujours possible de déterminer quel algorithme de pilotage est le plus adapté à un contexte technique particulier. En effet, de nombreuses contraintes peuvent avoir un impact sur le choix de la stratégie de pilotage à adopter.

Certaines contraintes peuvent par exemple être liées aux caractéristiques techniques de l'infrastructure de recharge elle-même, tels que par exemple la puissance électrique maximale pouvant être délivrée par chaque point de recharge, la puissance électrique maximale pouvant être délivrée par chaque borne de recharge et/ou la puissance électrique maximale pouvant être délivrée par l'infrastructure de recharge, et/ou, dans le cas où les points de recharge incluent des prises électriques triphasées, la répartition de la puissance électrique délivrée entre les différentes phases, et/ou les types de bornes de recharges (courant continu ou courant alternatif.)

D'autres contraintes peuvent par exemple être liées aux autres équipements électriques présents sur le site sur lequel est implanté l'infrastructure de recharge. En effet, ces équipements électriques additionnels peuvent inclure des équipements électriques consommateurs d'énergie électrique (tels que des équipements d'éclairage par exemple) ou des équipements électriques producteur d'énergie électrique (tels que des panneaux solaires par exemple). Ces équipements électriques peuvent modifier la puissance électrique disponible pour la recharge des véhicules électriques via l'infrastructure de recharge.

Enfin, d'autres contraintes à prendre en compte peuvent par exemple être liées au comportement particulier des usagers de l'infrastructure de recharge de véhicules électriques, notamment lorsque les véhicules électriques font partie d'une flotte de véhicules électriques exploitée par un même opérateur. En particulier, les heures d'arrivée, les heures de départ, les besoins en énergie électrique des véhicules électriques et les types de prises de raccordement auxquelles les usagers choisissent de raccorder les véhicules électriques (niveaux de puissance, phases utilisées) peuvent différer en fonction de l'activité de cet opérateur. A titre d'exemple, il peut s'agir d'une flotte de véhicules utilisés pour la livraison de marchandises ou de colis, ou d'une flotte de véhicules utilisés pour le transport de passagers, ou d'une flotte de véhicules électriques utilisés pour une autre activité métier.

Dans le document KR 2023 0119779 A est décrite une installation qui comprend plusieurs dispositifs de recharge de véhicules électriques installés dans un bâtiment, dans laquelle ces dispositifs de recharge déterminent individuellement les informations de comportement de charge pour le prochain cycle de contrôle de charge par le biais d'un algorithme de recherche arborescente de Monte Carlo (MCTS).

Par ailleurs, un dispositif de gestion de la demande d'énergie gérant la demande d'énergie de cette installation vérifie les informations relatives au comportement de charge de chacun de ces dispositifs de recharge de véhicules électriques.

Le dispositif de gestion de la demande d'énergie prédit, sur la base de ces informations respectives relatives au comportement de charge, une quantité de demande d'énergie pour ledit prochain cycle de contrôle de la charge.

Ce document décrit également une méthode de gestion de l'infrastructure de recharge, dans laquelle :
- ledit dispositif de gestion de la demande de puissance compare ladite quantité de demande de puissance à une quantité de puissance de référence prédéterminée (par exemple la puissance obtenue par abonnement auprès d'un opérateur) ;
- si la quantité de demande de puissance dépasse ladite quantité de puissance de référence, le dispositif de gestion de la demande de puissance détermine une priorité de fonctionnement de la pluralité de dispositifs de recharge ;
- lorsque le prochain cycle de contrôle de charge arrive, seul un ou plusieurs de ladite pluralité de dispositifs de recharge ayant une priorité de fonctionnement plus élevée que la priorité de référence sont exploités.

Cette méthode est mise en oeuvre via la réitération du même algorithme.

Enfin, en ce qui concerne les informations relatives à chaque dispositif de recharge, ce document indique que le premier dispositif de charge de véhicule électrique peut déterminer les informations relatives au comportement de charge par le biais d'un algorithme de recherche arborescente de Monte Carlo à chaque cycle de contrôle de charge d'une certaine unité de temps. Ainsi, le premier dispositif de charge de véhicule électrique peut notamment utiliser les informations sur l'état de charge d'un véhicule électrique connecté à lui-même, les informations sur la capacité de la batterie, le temps de stationnement et les besoins de charge, comme variables d'entrée de l'algorithme de recherche arborescente de Monte Carlo.

### RESUME DE L'INVENTION

Un but de l'invention est de pouvoir piloter une infrastructure de recharge de véhicules électriques (IRVE), en fournissant la meilleure qualité de service possible, tout en tenant compte des contraintes techniques s'exerçant sur l'infrastructure de recharge.

Ce but est atteint dans le cadre de la présente invention grâce à un procédé de sélection d'un algorithme de pilotage d'une infrastructure de recharge pour recharger des véhicules électriques, parmi une pluralité d'algorithmes de pilotage prédéfinis,
l'infrastructure de recharge comprenant une pluralité de bornes de recharge, chaque borne de recharge étant propre à être raccordée à un véhicule électrique pour délivrer au véhicule électrique une puissance électrique en fonction d'une consigne de puissance électrique attribuée à la borne de recharge,
chaque algorithme de pilotage étant propre à attribuer à chaque borne de recharge, une consigne de puissance électrique à délivrer à chaque véhicule électrique raccordé à la borne de recharge de l'infrastructure de recharge,
le procédé comprenant des étapes de :
   a - simuler un pilotage de l'infrastructure de recharge selon chacun des algorithmes de pilotage en suivant un même scénario prédéfini d'activité de l'infrastructure de recharge sur une période de temps donnée, le scénario prédéfini d'activité de l'infrastructure de recharge comprenant la recharge d'un ou de plusieurs véhicules électriques, et pour chaque véhicule électrique une plage horaire de raccordement du véhicule électrique à l'une des bornes de recharge de l'infrastructure de recharge et une valeur d'un besoin en énergie électrique du véhicule électrique,
   b - pour chaque algorithme de pilotage, calculer une valeur d'un indicateur de performance de l'algorithme de pilotage en fonction d'un résultat de la simulation sur la période de temps donnée,
   c - sélectionner l'un des algorithmes de pilotage parmi la pluralité d'algorithmes de pilotage prédéfinis, en fonction des valeurs de l'indicateur de performance calculées pour les différents algorithmes de pilotage.

Grâce au procédé proposé, il est possible de sélectionner et de mettre en oeuvre l'algorithme de pilotage de l'infrastructure de recharge qui fournit la meilleure qualité de service, parmi les algorithmes de pilotage prédéfinis, pour l'activité concernée. Pour chaque algorithme de pilotage, la qualité de service est évaluée grâce à l'indicateur de performance calculé, le choix de cet indicateur pouvant dépendre de l'activité pour laquelle les véhicules électriques sont utilisés.

Il est également possible de faire varier des paramètres de certains algorithmes de pilotage et de comparer les performances d'un même algorithme de pilotage lorsque cet algorithme de pilotage est paramétré avec des paramètres différents, pour l'activité concernée.

Il est également possible de tester de nouveaux algorithmes de pilotage, et de comparer leurs performances à des algorithmes de pilotage existants, pour l'activité concernée.

Dans un mode de réalisation du procédé proposé, l'indicateur de performance peut être choisi parmi :
- un nombre de dépassements, au cours de la période de temps, d'une puissance électrique maximale que l'infrastructure de recharge est capable de délivrer,
- une amplitude moyenne des dépassements, au cours de la période de temps,
- un taux de véhicules électriques totalement chargés à la fin de la période de temps,
- un taux de véhicules électriques chargés au-delà d'un seuil prédéfini d'état de charge à la fin de la période de temps,
- une quantité d'énergie électrique totale délivrée à l'ensemble des véhicules électriques par les bornes de recharge sur la période de temps,
- une quantité moyenne d'énergie électrique délivrée par véhicule électrique, sur la période de temps,
- un taux de dispersion des quantités d'énergie électrique délivrées aux différents véhicules sur la période de temps,
- un taux de dispersion des états de charges des différents véhicules électriques à la fin de la période de temps,
- une moyenne des durées de recharge complète des véhicules électriques,
- une moyenne pondérée des durées de recharge complète des véhicules électriques, avec des coefficients de pondération, chaque coefficient de pondération étant proportionnel à une puissance d'une prise de raccordement de la borne de recharge à laquelle est raccordé le véhicule électrique,
- un taux d'énergie délivrée aux véhicules électriques, en provenance d'une source d'énergie électrique locale donnée,
- un rapport entre une quantité d'énergie électrique délivrée aux véhicules électriques, en provenance d'une source d'énergie électrique locale donnée, et une quantité totale d'énergie électrique produite par la source d'énergie électrique locale donnée, sur la période de temps
- un nombre d'arrêts de la charge des véhicules au cours de la période de temps.

Dans un mode de réalisation du procédé proposé, les étapes a et b sont répétées avec un nouveau scénario prédéfini d'activité de l'infrastructure de recharge, de manière à obtenir, pour chaque algorithme de pilotage, plusieurs valeurs de l'indicateur de performance.

En particulier, les étapes a et b peuvent être répétées avec un nouveau scénario prédéfini d'activité de l'infrastructure de recharge sur une période de temps donnée suivante de même durée que la période de temps donnée précédente.

Dans un mode de réalisation du procédé proposé, le procédé peut comprendre en outre une étape de :
d - pour chaque algorithme de pilotage, déterminer une valeur d'un indicateur de performance agrégé calculée en fonction des valeurs de l'indicateur de performance obtenues en répétant les étapes a et b,
l'étape c comprenant une étape de comparer entre eux les valeurs de l'indicateur de performance agrégé des algorithmes de pilotage, et sélectionner l'algorithme de pilotage en fonction d'un résultat de la comparaison.

L'indicateur de performance agrégé peut être choisi parmi :
- une moyenne des valeurs des indicateurs de performance calculés sur les différentes périodes de temps, et/ou
- un écart-type des valeurs des indicateurs de performance calculés sur les différentes périodes de temps.

Dans un mode de réalisation du procédé proposé, le procédé peut comprendre une étape préalable de :
e - générer une série de N scénarios d'activité de l'infrastructure de recharge,
les étapes a et b étant exécutées N fois, en suivant les scénarios d'activité, de manière à obtenir N valeurs de l'indicateur de performance pour chaque algorithme de pilotage.

Les N scénarios d'activité de l'infrastructure de recharge peuvent être des scénarios d'activité successifs, chaque i+1-ième scénario se déroulant sur une période de temps qui suit immédiatement une période de temps sur laquelle se déroule le i-ième scénario qui précède,
les étapes a et b étant exécutées N fois, en suivant les scénarios d'activité successifs, de manière à obtenir les N valeurs de l'indicateur de performance pour chaque algorithme de pilotage.

Dans un mode de réalisation du procédé proposé, au cours de l'étape e, chaque scénario d'activité de l'infrastructure peut être obtenu par tirage aléatoire de paramètres du scénario d'activité.

Dans un mode de réalisation du procédé proposé, le procédé peut comprendre une étape préalable à l'étape e de :
f - à partir de données d'historique de l'infrastructure de recharge, déterminer une valeur moyenne et/ou une valeur d'écart-type des heures d'arrivée des véhicules électriques, une valeur moyenne et/ou une valeur d'écart-type des heures de départ des véhicules électriques, et une valeur moyenne et/ou une valeur d'écart-type des besoins en énergie électrique des véhicules électriques,
et dans lequel au cours de l'étape e, chaque scénario d'activité de l'infrastructure est obtenu par tirage aléatoire de paramètres du scénario d'activité, de manière à respecter les valeurs moyennes et/ou d'écart-type calculées à l'étape f sur l'ensemble des tirages.

Dans un mode de réalisation du procédé proposé, le procédé peut comprendre une étape préalable à l'étape e de :
g - à partir de données d'historique de l'infrastructure de recharge, classer chaque véhicule électrique dans un groupe de véhicules électriques, chaque groupe de véhicules électriques regroupant une pluralité de véhicules électriques, et à chaque groupe étant associé une valeur moyenne et/ou une valeur d'écart-type des heures d'arrivée des véhicules électriques du groupe, une valeur moyenne et/ou une valeur d'écart-type des heures de départ des véhicules électriques du groupe, et une valeur moyenne et/ou une valeur d'écart-type des besoins en énergie électrique des véhicules électriques du groupe,
et dans lequel au cours de l'étape e, chaque scénario d'activité de l'infrastructure de recharge est obtenu par tirage aléatoire de paramètres du scénario d'activité, de manière à respecter une proportion de véhicules électriques dans chaque groupe ainsi que les valeurs moyennes et/ou d'écart-type calculées à l'étape g associés à chaque groupe de véhicules électriques, sur l'ensemble des tirages.

Dans un mode de réalisation du procédé proposé, chaque scénario d'activité de l'infrastructure de recharge peut comprendre en outre pour chaque véhicule électrique, l'un des paramètres suivants :
- un instant d'arrivée du véhicule électrique dans l'infrastructure de recharge,
- un instant de départ du véhicule électrique de l'infrastructure de recharge,
- un état de charge initial du véhicule électrique, au moment du raccordement du véhicule à la borne de recharge,
- une capacité d'une batterie du véhicule électrique,
- une puissance minimale de charge du véhicule électrique,
- une puissance maximale de charge du véhicule électrique,
- un identifiant d'une prise de raccordement à laquelle est raccordé le véhicule électrique,
- un état initial de mode de charge du véhicule électrique au début de la période de temps.

Dans un mode de réalisation du procédé proposé, le procédé proposé peut comprendre une étape de :
h - piloter l'infrastructure de recharge de véhicules électriques en exécutant l'algorithme de pilotage sélectionné à l'étape c.

L'invention concerne en outre un produit programme d'ordinateur comprenant des instructions de code de programme pour l'exécution des étapes du procédé tel que défini précédemment, lorsque ce programme est exécuté par un ordinateur.

L'invention concerne également une mémoire lisible par ordinateur stockant des instructions exécutables par l'ordinateur pour l'exécution des étapes du procédé tel que défini précédemment.

### PRESENTATION DES DESSINS

D'autres caractéristiques et avantages ressortiront encore de la description qui suit, laquelle est purement illustrative et non limitative, et doit être lue en regard des figures annexées, parmi lesquelles :
- la figure 1 représente de manière schématique, une infrastructure de recharge de véhicules électriques,
- la figure 2 représente de manière schématique, des étapes d'un procédé de sélection d'un algorithme de pilotage d'une infrastructure de recharge de véhicules électriques,
- la figure 3 représente de manière schématique, une architecture d'un simulateur pouvant être utilisé pour la mise en oeuvre d'un procédé de sélection d'un algorithme de pilotage de l'infrastructure de recharge de véhicules électriques.

### DESCRIPTION DETAILLEE D'UN MODE DE REALISATION

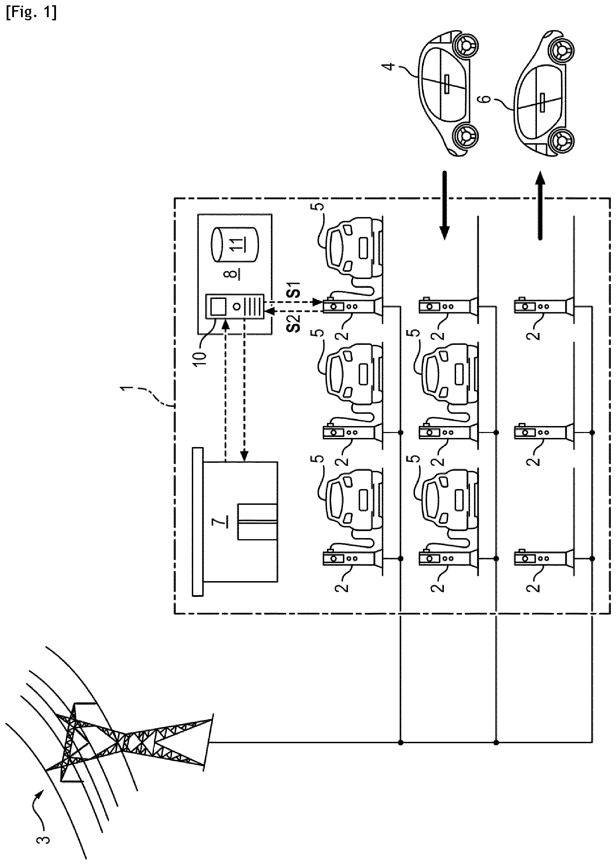

Sur la figure 1, l'infrastructure de recharge de véhicules électriques 1 représentée comprend une pluralité de bornes de recharge 2.

Chaque borne de recharge 2 est raccordée à un réseau public de distribution d'énergie électrique ou à un réseau intérieur d'installation électrique 3. Le réseau public de distribution électrique ou le réseau intérieur d'installation électrique 3 est propre à alimenter la borne de recharge 2 en énergie électrique.

De plus, chaque borne de recharge 2 est propre à être raccordée de manière temporaire à un ou plusieurs véhicule(s) électrique(s) pour délivrer au(x) véhicule(s) électrique(s) une puissance électrique, au cours du temps, selon une consigne de puissance électrique attribuée à la borne de recharge.

Plus précisément, chaque borne de recharge 2 peut comprendre un ou plusieurs points de recharge, par exemple deux points de recharge. Chaque point de recharge est propre à être raccordé à un véhicule électrique respectif. Ainsi, dans le cas où la borne de recharge 2 comprend deux points de recharge, la borne de recharge 2 peut être raccordée simultanément à deux véhicules électriques.

Par ailleurs, chaque point de recharge peut comprendre une ou plusieurs prises de raccordement, chaque prise de raccordement étant propre à délivrer une puissance électrique maximale prédéfinie. Par exemple, un même point de recharge peut comprendre une prise de raccordement de faible puissance (par exemple capable de délivrer une puissance électrique de 7 kilowatts) et une prise de raccordement de forte puissance (par exemple capable de délivrer une puissance électrique de 22 kilowatts) pilotable. Lorsqu'un véhicule électrique est raccordé à un point de charge, il est raccordé sélectivement à l'une des prises de raccordement du point de charge, en fonction des besoins.

Au cours du temps, des véhicules électriques peuvent entrer et/ou sortir de l'infrastructure de recharge 1.

Dans l'exemple illustré sur la figure 1, un véhicule électrique 4 (appelé « véhicule électrique entrant ») entre dans l'infrastructure de recharge 1 en vue d'être rechargé.

De plus, plusieurs véhicules électriques 5 sont déjà présents dans l'infrastructure de recharge 1. Chacun des véhicules électriques 5 déjà présents est raccordé à une borne de recharge respective 2. Les véhicules électriques 5 déjà présents sont en cours de recharge.

Un véhicule électrique 6 (appelé « véhicule électrique sortant ») sort de l'infrastructure de recharge 1, après avoir été rechargé via l'une des bornes de recharge 2.

L'infrastructure de recharge 1 peut comprendre en outre des équipements électriques additionnels 7, également raccordés au réseau public de distribution d'énergie électrique ou au réseau intérieur d'installation électrique 3. Ces équipements électriques additionnels 7 peuvent comprendre des équipements électriques consommateurs d'énergie électriques (par exemple des équipements pour l'éclairage de l'installation) et/ou des équipements électriques producteurs d'énergie électrique (par exemple des panneaux solaires, des éoliennes ou d'autres sources locales d'énergie électrique) et/ou des équipements de stockage d'énergie électrique, capables de recevoir de l'énergie électrique, de la stocker (éventuellement sous une autre forme) et de la restituer ultérieurement (par exemple une batterie).

Par ailleurs, dans l'exemple illustré sur la figure 1, l'infrastructure de recharge de véhicules électriques 1 comprend un centre de gestion 8. Le centre de gestion 8 comprend un module de gestion 10, configuré pour commander les différentes bornes de recharge 2, et une base de données 11, configurée pour stocker des données en provenance des bornes de recharge 2.

Dans l'exemple illustré sur la figure 1, le centre de gestion 8, incluant le module de gestion 10 ainsi que la base de données 11, fait partie de l'infrastructure de recharge 1. Toutefois, dans un autre exemple, le module de gestion 10 et/ou la base de données 11 pourrait ne pas faire partie de l'infrastructure de recharge 1. En particulier, le centre de gestion 8 et/ou le module de gestion 10 et/ou la base de données 11 peuvent être situés à distance de l'infrastructure de recharge 1. De plus, le module de gestion 10 peut être configuré pour commander des bornes de recharge situées dans plusieurs infrastructures de recharge de véhicules électriques.

Chaque borne de recharge 2 est propre à transmettre au module de gestion 10 un signal S1 de requête de recharge.

Le module de gestion 10 est configuré pour, en fonction des données contenues dans le signal de requête de recharge S1, générer un signal de commande de recharge S2 à destination de la borne de recharge 2 ayant émis le signal de requête de recharge S1.

La borne de recharge 2 est configurée pour recharger le véhicule électrique selon une valeur de puissance électrique de consigne transmise via le signal de commande de recharge S2.

Par ailleurs, le module de gestion 10 est configuré pour enregistrer dans la base de données 11 des données relatives aux heures d'arrivée, aux heures de départ, aux besoins en énergie électrique des véhicules électriques, ainsi que les données représentatives des valeurs de puissance électriques de consigne calculés par le module de gestion 10 pour les différents véhicules électriques.

En pratique, le module de gestion 10 comprend un ou plusieurs processeur(s). Le module de gestion 10 comprend ou est couplé à une mémoire dans laquelle est enregistré un logiciel de pilotage de l'infrastructure de recharge 1 et, le cas échéant, des données manipulées par le logiciel de pilotage (données d'entrée du logiciel de pilotage et/ou données de sortie générées par le logiciel de pilotage).

Les véhicules électriques 4, 5, 6 peuvent faire partie d'une flotte de véhicules électriques exploitée par un même opérateur de service, par exemple dans le cadre d'une activité de transport de passagers, ou d'une activité de livraison de marchandises, ou d'une activité de dépannage et de maintenance, ou encore d'une activité de location de véhicules électriques, ou de tout autre activité « métier » nécessitant l'utilisation de véhicules.

Le logiciel de pilotage de l'infrastructure de recharge de véhicules électriques 1 a été choisi pour fournir la meilleure qualité de service possible, en tenant compte des contraintes techniques s'exerçant sur l'infrastructure de recharge et du contexte dans lequel s'exerce l'activité métier de l'opérateur de service.

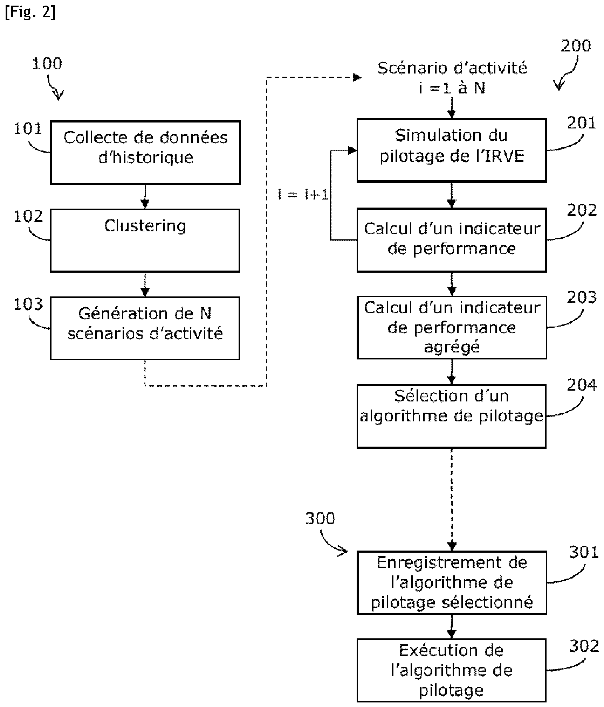

La figure 2 représente de manière schématique des étapes d'un procédé de sélection d'un algorithme de pilotage d'une infrastructure de recharge de véhicules électriques, parmi une pluralité d'algorithmes de pilotage prédéfinis.

Le procédé comprend trois phases :
- une première phase 100 de collecte et/ou de génération de données d'entrée de la simulation,
- une deuxième phase 200 de simulation de l'exécution des algorithmes de pilotage, à partir des données d'entrée de la simulation,
- une troisième phase 300 de mise en oeuvre de l'algorithme de pilotage sélectionné à l'issue de la deuxième phase.

Ces trois phases comprennent les étapes suivantes.

### Première phase : collecte et/ou génération de données d'entrée de la simulation

Selon une première étape 101, des données d'historique relatives à l'infrastructure de recharge sont collectées.

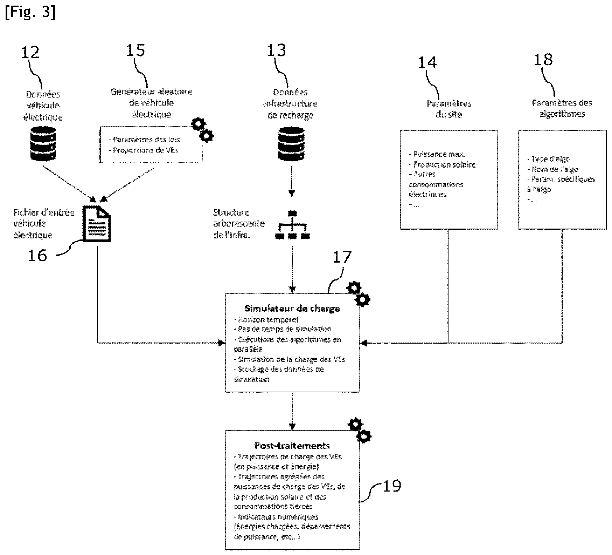

Comme illustré sur la figure 3, les données d'historiques collectées comprennent :
- des données d'historiques 12 représentatives de l'activité de l'infrastructure de recharge de véhicules électriques, et
- des données 13 relatives aux caractéristiques techniques de l'infrastructure de recharge de véhicules électriques.

Les données d'historiques 12 représentatives de l'activité de l'infrastructure de recharge de véhicules électriques 1 sont regroupées en une pluralité de fichiers. Chaque fichier contient des données d'historiques 12 représentatives de l'activité de l'infrastructure de recharge de véhicules électriques enregistrées pendant une période de temps donnée respective. Les périodes de temps sont de durée identique (par exemple une durée égale à une journée, c'est-à-dire 24 heures). Ainsi les données d'historiques 12 représentatives de l'activité de l'infrastructure de recharge de véhicules électriques 1 comprennent une pluralité de périodes de temps, et pour chaque période de temps :
- un identifiant de véhicule électrique,
- une heure d'arrivée du véhicule électrique dans l'infrastructure de recharge,
- une heure de sortie du véhicule électrique de l'infrastructure de recharge,
- un état de charge initial de la batterie du véhicule électrique (SoC initial) en kilowattheure (kWh), l'état de charge initial étant défini comme le niveau d'énergie électrique de la batterie au début de la période de temps,
- une capacité de la batterie du véhicule électrique (SoC maximal) en kilowattheure (kWh), la capacité de la batterie étant définie comme le niveau maximal d'énergie électrique pouvant être stocké par la batterie du véhicule électrique,
- un besoin en énergie électrique du véhicule électrique (SoC cible) en kilowattheure (kWh),
- une puissance minimale de charge du véhicule électrique en kilowatts (kW),
- une puissance maximale de charge du véhicule électrique en kilowatts (kW),
- un identifiant d'une prise de connexion à laquelle est raccordé le véhicule électrique,
- un état initial de mode de charge du véhicule électrique au début de la période de temps, le mode de charge pouvant prendre sélectivement l'une parmi les valeurs suivantes : « en charge » (le véhicule est en cours de charge), « chargé » (le véhicule est totalement chargé et ne peut plus recevoir d'énergie électrique), « en pause » (le véhicule électrique n'est pas en cours de charge, mais le véhicule électrique n'est pas totalement chargé de sorte qu'il peut recevoir de l'énergie électrique).

Les données d'historique 12 peuvent avoir été collectées sur une durée de plusieurs mois, par exemple 3 mois, ou sur une durée supérieure à une année.

Les données 13 relatives aux caractéristiques techniques de l'infrastructure de recharge de véhicules électriques, comprennent :
- une structure arborescente comprenant une pluralité de noeuds, et pour chaque noeud, des données de raccordement avec d'autres noeuds de la structure arborescente,
- pour chaque noeud, le type du noeud, le type du noeud pouvant prendre sélectivement l'une parmi les valeurs suivantes : « compteur », « borne de recharge », « point de charge », « prise de connexion »,
- pour chaque prise de connexion, les phases disponibles,
- pour chaque phase disponible de la prise de connexion, la puissance maximale autorisée,
- pour chaque phase disponible de la prise de connexion, la puissance minimale autorisée.

Les données collectées peuvent également comprendre des données 14 relatives à des équipements électriques additionnels présents sur le site de l'infrastructure de recharge de véhicules électriques, tels que, pour chaque période de temps :
- une quantité d'énergie électrique consommée par les équipements électriques additionnels (par exemple des équipements pour l'éclairage), et/ou
- une quantité d'énergie électrique produite par les équipements électriques additionnels (par exemple des panneaux photovoltaïques),
ainsi qu'une puissance électrique maximale pouvant être fournie par le réseau public de distribution d'énergie électrique ou le réseau intérieur d'installation électrique 3.

Les données d'historique 12 collectées à la première étape sont ensuite utilisées pour générer une pluralité de scénarios d'activité 15 de l'infrastructure de recharge de véhicules électriques.

A cet effet, selon une deuxième étape 102, les valeurs suivantes sont déterminées :
- une valeur moyenne des heures d'arrivée des véhicules électriques, sur l'ensemble des périodes de temps (chaque période de temps ayant par exemple une durée égale à une journée),
- une valeur d'écart-type des heures d'arrivée des véhicules électriques, sur l'ensemble des périodes de temps,
- une valeur moyenne des heures de départ des véhicules électriques, sur l'ensemble des périodes de temps,
- une valeur d'écart-type des heures de départ des véhicules électriques, sur l'ensemble des périodes de temps,
- une valeur moyenne des besoins en énergie électrique des véhicules électriques, sur l'ensemble des périodes de temps,
- une valeur d'écart-type des besoins en énergie électrique des véhicules électriques, sur l'ensemble des périodes de temps.

Les valeurs moyennes et des écarts-type indiqués précédemment peuvent être calculés pour l'ensemble des véhicules électriques de la flotte.

Alternativement, lors de cette deuxième étape 102, chaque véhicule électrique peut être classé dans un groupe de véhicules électriques (ou « cluster »), chaque groupe de véhicules électriques regroupant une pluralité de véhicules électriques, et à chaque groupe de véhicules électriques étant associé une valeur moyenne et/ou une valeur d'écart-type des heures d'arrivée des véhicules électriques du groupe, une valeur moyenne et/ou une valeur d'écart-type des heures de départ des véhicules électriques du groupe, et une valeur moyenne et/ou une valeur d'écart-type des besoins en énergie électrique des véhicules électriques du groupe.

De plus, lors de cette deuxième étape 102, pour chaque groupe de véhicules électriques, une proportion de véhicules électriques dans le groupe est calculée. La proportion de véhicules dans un groupe est définie comme un rapport entre le nombre de véhicules électriques faisant partie du groupe et le nombre total de véhicules électriques. Le nombre total de véhicules électriques est la somme des nombres de véhicules électriques dans l'ensemble des groupes. Autrement dit, dans le cas où les véhicules électriques font partie d'une même flotte, le nombre total de véhicules électriques est le nombre de véhicules électriques faisant partie de la flotte.

Selon une troisième étape 103, une pluralité de scénarios d'activité de l'infrastructure sont générés à partir des valeurs moyennes et des écarts-type calculés lors de la deuxième étape 102.

Chaque scénario d'activité de l'infrastructure peut être obtenu par tirage aléatoire de paramètres du scénario d'activité, de manière à respecter la proportion de véhicules électriques dans chaque groupe ainsi que les valeurs moyennes et/ou d'écart-type calculées lors de la deuxième étape 102 sur l'ensemble des tirages.

Le tirage aléatoire peut être réalisé au moyen d'un générateur aléatoire 17 utilisant une loi de probabilité, par exemple une loi de probabilité gaussienne sur chaque groupe de véhicules électriques.

Plus précisément, la troisième étape 103 conduit à générer une série de N scénarios.

Selon un premier exemple, il est possible de générer N scénarios successifs d'activité de l'infrastructure de recharge, chaque i+1-ième scénario se déroulant sur une période de temps qui suit immédiatement une période de temps sur laquelle se déroule le i-ième scénario qui précède.

Le nombre N de scénarios de la série peut par exemple être égal à 365, c'est-à-dire au nombre de jours dans une année, de manière à simuler l'activité de l'infrastructure de recharge de véhicules automobiles sur une année complète, chaque scénario se déroulant sur une journée.

Selon un deuxième exemple, il est également possible de générer plusieurs scénarios d'activité de l'infrastructure de recharge se déroulant sur la même période de temps.

Il est ainsi possible de générer pour chaque période de temps d'une série de n période de temps, m scénarios d'activité de l'infrastructure de recharge. Dans ce cas, le nombre N de scénarios générés est égal à n x m.

Chaque scénario d'activité généré i comprend, sur la période de temps associée au scénario d'activité, la recharge d'un ou de plusieurs véhicules électriques identifié(s) de la flotte, et pour chaque véhicule électrique, les paramètres suivants :
- un instant d'arrivée du véhicule électrique dans l'infrastructure de recharge,
- un instant de départ du véhicule électrique de l'infrastructure de recharge,
- une valeur d'un besoin en énergie électrique du véhicule électrique,
- un état de charge initial du véhicule électrique, au moment du raccordement du véhicule à la borne de recharge,
- une capacité d'une batterie du véhicule électrique,
- une puissance minimale de charge du véhicule électrique,
- une puissance maximale de charge du véhicule électrique,
- un identifiant de la prise de connexion à laquelle est raccordé le véhicule électrique,
- un état initial de mode de charge du véhicule électrique au début de la période de temps.

L'ensemble des N scénarios générés respectent la proportion de véhicules électriques dans chaque groupe ainsi que les valeurs moyennes et/ou d'écart-type calculées lors de la deuxième étape 102.

Chaque scénario i généré est enregistré dans un fichier correspondant, et sera utilisé comme données d'entrée 16 de la simulation.

Dans le cas où les données d'historiques 12 sont complètes et ont été collectées sur une longue durée (par exemple sur une ou plusieurs années), les données d'entrée 16 de la simulation peuvent comprendre uniquement des scénarios réels représentatifs d'une activité réelle de l'infrastructure de recharge de véhicules électriques, obtenus grâce aux données d'historiques préalablement collectées.

En revanche, dans le cas où les données d'historiques 12 sont incomplètes et/ou ont été collectées sur une courte durée (par exemple sur quelques mois), il est possible d'inclure dans les données d'entrée 16 de la simulation, à la fois des scénarios réels représentatifs de l'activité réelle de l'infrastructure de recharge de véhicules électriques, obtenus grâce aux données d'historiques préalablement collectées, et des scénarios additionnels générés selon les étapes qui précèdent.

Dans le cas où très peu de données d'historique sont disponibles ou il n'existe aucune donnée d'historique, les données d'entrée de la simulation sont des données qui ont été générées par tirage aléatoire, à partir de valeurs préalablement définies par l'opérateur de l'infrastructure de recharge, à savoir :
- une valeur moyenne des heures d'arrivée des véhicules électriques, et
- une valeur moyenne des besoins en énergie électrique des véhicules électriques.

De plus, les écarts-type sont définis arbitrairement et les tirages aléatoires sont réalisés à partir d'une loi gaussienne.

### Deuxième phase : exécution des algorithmes de pilotage, à partir des données d'entrée de la simulation

Cette deuxième phase 200 est mise en oeuvre par un ordinateur. L'ordinateur comprend ou est couplé à une mémoire dans laquelle est enregistré un simulateur de charge 17. De plus, l'ordinateur comprend ou est couplé à une mémoire dans laquelle sont enregistrés un ou plusieurs logiciel(s) de pilotage 18 de l'infrastructure de recharge 1 et, le cas échéant, des données manipulées par les logiciels de pilotage (à savoir les données d'entrée collectées et/ou générées précédemment, et/ou les données de sortie générées par la simulation).

L'ordinateur est programmé pour exécuter les étapes suivantes :
pour i allant de 1 à N : Selon une première étape 201, l'ordinateur simule un pilotage de l'infrastructure de recharge 1 selon chacun des algorithmes de pilotage en suivant le scénario d'activité i de l'infrastructure de recharge sur la période de temps associée au scénario i, via le simulateur de charge 17.

Selon le premier exemple, dans le cas où la durée de la période de temps est d'une journée, le scénario d'activité i est le scénario qui se déroule au cours du i-ième jour parmi les N jours.

Le scénario d'activité i de l'infrastructure de recharge comprend la recharge d'un ou de plusieurs véhicules électriques au cours de la i-ème période de temps, et pour chaque véhicule électrique une heure d'entrée du véhicule électrique dans l'infrastructure de recharge de véhicules électriques (assimilée à une heure de raccordement du véhicule électrique à l'une des bornes de l'infrastructure de recharge) et une valeur d'un besoin en énergie électrique du véhicule électrique.

Au cours de cette étape de simulation, chaque algorithme de pilotage de l'infrastructure attribue à chaque borne de recharge, une valeur de consigne de puissance électrique, en fonction des heures d'arrivée des véhicules électriques dans l'infrastructure de recharge et des valeurs de besoins en énergie électrique des véhicules électriques.

Selon le deuxième exemple, dans le cas où la durée de la période de temps est d'une journée, le scénario d'activité i est le j-ième scénario parmi les m scénarios qui se déroulent au cours du k-ième jour parmi les n jours, tel que j x k = i.

Selon une deuxième étape 202, pour chaque algorithme de pilotage, l'ordinateur calcule un ou plusieurs indicateur(s) de performance 19 de l'algorithme de pilotage sur la période de temps.

Le ou les indicateur(s) de performance 19 peu(ven)t être choisi(s) parmi :
- un nombre de dépassements d'une puissance électrique maximale que l'infrastructure de recharge est capable de délivrer, au cours de la période de temps,
- une amplitude moyenne des dépassements de la puissance électrique maximale que l'infrastructure de recharge est capable de délivrer, au cours de la période de temps,
- un taux de véhicules électriques totalement chargés à la fin de la période de temps,
- un taux de véhicules électriques chargés au-delà d'un seuil prédéfini d'état de charge à la fin de la période de temps,
- une quantité d'énergie électrique totale délivrée à l'ensemble des véhicules électriques par les bornes de recharge sur la période de temps,
- une quantité moyenne d'énergie électrique délivrée par véhicule électrique, sur la période de temps,
- un taux de dispersion des quantités d'énergie électrique délivrées aux différents véhicules sur la période de temps,
- un taux de dispersion des états de charges des différents véhicules électriques à la fin de la période de temps,
- une moyenne des durées de recharge complète des véhicules électriques,
- une moyenne pondérée des durées de recharge complète des véhicules électriques, avec des coefficients de pondération, chaque coefficient de pondération étant proportionnel à une puissance d'une prise de la borne de recharge à laquelle est raccordé le véhicule électrique,
- un taux d'énergie délivrée aux véhicules électriques, en provenance d'une source d'énergie électrique locale donnée,
- un rapport entre une quantité d'énergie électrique délivrée aux véhicules électriques, en provenance d'une source d'énergie électrique locale donnée, et une quantité totale d'énergie électrique produite par la source d'énergie électrique locale donnée, sur la période de temps.

D'autres paramètres peuvent être calculés, tels que l'instant de fin de charge (ce qui permet de déduire la durée de recharge), les puissances des prises de la borne de recharge, l'énergie consommée en provenance d'une source locale donnée d'énergie électrique ou en provenance du réseau public de distribution électrique ou réseau intérieur d'installation électrique 3, le nombre de véhicules électriques totalement chargés au cours de la période, le nombre total de véhicules électriques sur la période. Ces paramètres pourront être utilisés par la suite pour calculer un indicateur de performance agrégé lors d'une troisième étape ultérieure.

Puis, l'ordinateur répète les étapes 201 et 202 avec un nouveau scénario prédéfini d'activité de l'infrastructure de recharge.

Autrement dit, les étapes 201 et 202 sont répétées en remplaçant le scénario d'activité i par le scénario d'activité i+1.

Selon le premier exemple, chaque i+1-ième scénario se déroule sur une période de temps qui suit immédiatement la période de temps sur laquelle se déroule le i-ième scénario qui précède.

Selon le deuxième exemple :
- si k < m, alors le i+1-ième scénario se déroule sur une période de temps identique à la période de temps au cours de laquelle se déroule le i-ième scénario, à savoir la période de temps j, et
- si k = m, alors le i+1-ième scénario se déroule sur une période de temps qui suit immédiatement la période de temps sur laquelle se déroule le i-ième scénario, à savoir la période de temps j + 1.

L'exécution des étapes 201 et 202 avec les N scénarios conduit à l'obtention, pour chaque algorithme de pilotage, de N valeurs de l'indicateur de performance, chaque valeur de l'indicateur de performance étant associée à une période de temps.

Selon une troisième étape 203, l'ordinateur détermine, pour chaque algorithme de pilotage, un ou plusieurs indicateur(s) de performance agrégé(s). Chaque indicateur de performance agrégé est calculé en fonction des N valeurs de l'indicateur de performance associées aux différentes périodes de temps.

Le ou les indicateur(s) de performance agrégé(s) peuv(en)t être choisi(s) parmi :
- une moyenne des N valeurs de l'indicateur de performance, calculée sur l'ensemble des périodes de temps, et/ou
- un écart-type des N valeurs de l'indicateur de performance, calculé sur l'ensemble périodes de temps, et/ou

- une moyenne des meilleures valeurs de l'indicateur de performance (par exemple, une moyenne des 5% des N valeurs de l'indicateur les plus élevées ou les plus faibles), et/ou
- une moyenne des pires valeurs de l'indicateur de performance (par exemple, une moyenne des 5% des N valeurs de l'indicateur les plus élevées ou les plus faibles).

L'indicateur de performance agrégé peut être défini comme une combinaison d'une moyenne et d'un écart-type afin d'obtenir un indicateur de performance agrégé le plus pertinent possible en fonction des critères de qualité de service recherchés.

Par exemple, le ou les indicateur(s) de performance agrégé(s) peu(ven)t être choisi(s) parmi :
- un nombre moyen de dépassements de la puissance électrique maximale que l'infrastructure de recharge est capable de délivrer, au cours d'une période de temps,
- une amplitude moyenne des dépassement de la puissance électrique maximale que l'infrastructure de recharge est capable de délivrer, au cours d'une période de temps,
- un nombre de périodes de temps au cours desquelles un nombre donné de dépassement se sont produits (par exemple nombre de périodes de temps au cours desquelles au moins 3 dépassements se sont produits),
- un taux moyen d'utilisation de l'infrastructure de recharge par rapport à la capacité maximale de l'infrastructure de recharge,
- un taux moyen de véhicules électriques totalement chargés à la fin d'une période de temps,
- un taux moyen de véhicules électriques chargés au-delà d'un seuil prédéfini d'état de charge à la fin d'une période de temps,
- une quantité moyenne d'énergie électrique totale délivrée à l'ensemble des véhicules électriques par les bornes de recharge sur une période de temps,
- une quantité moyenne d'énergie électrique délivrée par véhicule électrique, sur une période de temps,
- un taux de dispersion des quantités d'énergie électrique délivrées aux différents véhicules sur une période de temps,
- un taux de dispersion des états de charges des différents véhicules électriques à la fin d'une période de temps,
- une moyenne des durées de recharge complète des véhicules électriques,
- une moyenne pondérée des durées de recharge complète des véhicules électriques, avec des coefficients de pondération, chaque coefficient de pondération étant proportionnel à une puissance d'une prise de raccordement de la borne de recharge à laquelle est raccordé le véhicule électrique,
- un taux moyen d'énergie délivrée aux véhicules électriques, en provenance d'une source d'énergie électrique locale donnée,
- un rapport entre une quantité d'énergie électrique délivrée aux véhicules électriques, en provenance d'une source d'énergie électrique locale donnée, et une quantité totale d'énergie électrique produite par la source d'énergie électrique locale donnée, sur l'ensemble des périodes de temps.

Le ou les indicateurs de performance agrégé(s) choisi(s) dépendent des critères de qualité de service (QoS) visés par l'opérateur de l'infrastructure de recharge de véhicules électriques 1.

A titre d'exemple, les critères de qualité de service peuvent être les suivants :

| **QoS** | **Critères** | **Indicateurs de performance agrégés** |
|---|---|---|
| **QoS#1** | • Maximisation de la charge des véhicules électriques | • Quantité moyenne d'énergie électrique totale délivrée à l'ensemble des véhicules électriques par les bornes de recharge sur une période de temps |
| | • Respect des contraintes physiques de l'IRVE | |
| | | • Nombre moyen de dépassements de la puissance électrique maximale que l'infrastructure de recharge est capable de délivrer, au cours d'une période de temps |
| **QoS#2** | • Atteinte d'un niveau de charge cible (correspondant au besoin métier de l'opérateur ou des utilisateurs), pour l'ensemble des véhicules électriques, par exemple un niveau de charge cible allant de 80% à 90% de la capacité batterie des véhicules électriques | • Taux moyen de véhicules électriques chargés au-delà d'un seuil prédéfini d'état de charge à la fin d'une période de temps |
| | | • Nombre moyen de dépassements de la puissance électrique maximale que l'infrastructure de recharge est capable de délivrer, au cours d'une période de temps |
| | • Respect des contraintes physiques de l'IRVE | |
| **QoS#3** | • Charge au plus tôt des véhicules électriques (ce critère rend compte de l'urgence de la charge et favorise les solutions qui vont permettre d'atteindre un niveau de charge cible le plus rapidement possible) | • Moyenne des durées de recharge complète des véhicules électriques |
| | | • Nombre moyen de dépassements de la puissance électrique maximale que l'infrastructure de recharge est capable de délivrer, au cours d'une période de temps |
| | • Respect des contraintes physiques de l'IRVE | |
| **QoS#4** | • Maximisation de l'utilisation de la puissance mise à disposition par l'IRVE en fournissant une puissance de charge proportionnelle à la puissance de la prise de raccordement pour chaque véhicule électrique (ce critère permet notamment d'améliorer l'expérience utilisateur : un utilisateur se connectant à une prise capable de délivrer une forte puissance s'attend à recevoir la puissance affichée) | • Moyenne pondérée des durées de recharge complète des véhicules électriques |
| | | • Nombre moyen de dépassements de la puissance électrique maximale que l'infrastructure de recharge est capable de délivrer, au cours d'une période de temps |
| | • Respect des contraintes physiques de l'IRVE | |
| **QoS#5** | • Maximisation de la consommation d'énergie électrique produite par une source d'énergie électrique locale donnée | • Rapport entre une quantité d'énergie électrique délivrée aux véhicules électriques, en provenance d'une source d'énergie électrique locale donnée, et une quantité totale d'énergie électrique produite par la source d'énergie électrique locale donnée |
| | • Atteinte d'un niveau de charge cible | • Taux moyen de véhicules électriques chargés au-delà d'un seuil prédéfini d'état de charge à la fin d'une période de temps |
| | • Respect des contraintes physiques de l'IRVE | • Nombre moyen de dépassements de la puissance électrique maximale que l'infrastructure de recharge est capable de délivrer, au cours d'une période de temps |

Par ailleurs, en plus de ces indicateurs de performance agrégés, l'ordinateur peut générer des courbes pour une analyse plus fine des comportements des algorithmes de pilotage. Ces courbes peuvent permettre, en cas d'égalité de performances entre deux algorithmes de pilotage, de sélectionner le meilleur candidat en analysant la dynamique de comportement de l'infrastructure de recharge au cours du temps. Les courbes générées par l'ordinateur peuvent comprendre :
- pour chaque algorithme de pilotage :
   pour chaque véhicule électrique, une courbe d'évolution de l'état de charge du véhicule électrique au cours de chaque période de temps,
   pour chaque véhicules électrique, une courbe d'évolution de la puissance électrique consommée par le véhicule électrique, au cours de chaque période de temps,
- et pour l'ensemble des algorithmes de pilotage :
   pour chaque véhicule électrique, une courbe d'évolution de la puissance électrique agrégée consommée par le véhicule électrique, au cours de chaque période de temps.

Selon une quatrième étape 204, l'ordinateur sélectionne l'un des algorithmes de pilotage parmi la pluralité d'algorithmes de pilotage prédéfinis, en fonction des indicateurs de performance agrégés calculés pour les différents algorithmes de pilotage simulés.

### Troisième phase : mise en oeuvre de l'algorithme de pilotage sélectionné

Selon une première étape 301, l'algorithme de pilotage sélectionné est enregistré dans la mémoire du module de gestion 10 de l'infrastructure de recharge de véhicules automobiles, ou le cas échéant dans la mémoire couplée au module de gestion 10.

Selon une deuxième étape 302, le module de gestion 10 de l'infrastructure de recharge pilote l'infrastructure de recharge de véhicules électrique en exécutant l'algorithme de pilotage sélectionné. Autrement dit, l'algorithme de pilotage attribue à chaque borne de recharge 2 de l'infrastructure de recharge de véhicules électriques 1, une valeur de consigne de puissance électrique. Le module de gestion 10 génère un signal de commande de recharge S2 à destination de la borne de recharge 2, représentatif de la valeur de consigne de puissance électrique attribuée par l'algorithme de pilotage.

### Exemple :

Dans cet exemple, une entreprise dispose d'une flotte de 10 véhicules électriques et a déployé sur son site une infrastructure de recharge destinée à la recharger les véhicules électriques de la flotte. Les véhicules électriques sont utilisés en journée par les employés de l'entreprise pour réaliser leurs activités métier.

L'infrastructure de recharge des véhicules électriques a été dimensionnée avec un coefficient de foisonnement égal à 0,6.

Le coefficient de foisonnement est défini comme la proportion de véhicules électriques de la flotte, pouvant être chargés simultanément par l'infrastructure de recharge de véhicules électriques, à la puissance maximale des prises de raccordement. Ce coefficient a été choisi inférieur à 1 afin de minimiser la taille des câbles électriques de l'infrastructure de recharge et ainsi réduire les coûts de l'infrastructure de recharge.

L'infrastructure de recharge de véhicules électriques comprend 10 bornes de recharge, munies chacune d'une seule prise de raccordement. Plus précisément, l'infrastructure de recharge de véhicules électrique comprend :
- 2 prises de puissance maximale de 50 kW,
- 2 prises de puissance maximale de 22kW,
- 3 prises de puissance maximale de 7kW,
- 3 prises de puissance maximale de 3kW.

Cela fait 3 mois que l'entreprise a déployé l'infrastructure de recharge de véhicules électriques et que les véhicules électriques utilisent l'infrastructure de recharge. Les véhicules électriques sont chargés à la puissance maximale disponible à la prise. Il y a eu de temps en temps des dépassements de puissance observés sur l'infrastructure de recharge de véhicules électriques, ce qui a entraîné des coupures du service et donc une interruption de la charge des véhicules électriques.

Durant ces 3 mois, et au cours de chaque journée, l'entreprise a pu collecter les données d'historique suivantes :
- heure d'arrivée de chaque véhicule électrique dans l'infrastructure de recharge, cette heure d'arrivée ayant été obtenue en horodatant l'événement de raccordement du véhicule électrique à la prise de raccordement,
- heure de départ de chaque véhicule électrique de l'infrastructure de recharge, obtenue en horodatant l'événement de déconnexion du véhicule électrique de la prise de raccordement,
- besoin en énergie électrique, assimilé à une quantité d'énergie électrique consommée (kWh) par chaque véhicule électrique au cours de la charge, cette quantité d'énergie électrique étant mesurée directement par la borne de recharge à laquelle le véhicule électrique est raccordé.

Ces données d'historiques sont stockées dans des fichiers, par exemple dans la mémoire du module de gestion, pour être utilisées ultérieurement par le simulateur de charge. Un fichier par jour ouvré est généré, ce qui permet de constituer une base initiale de 62 fichiers, correspondant à 62 scénarios d'activité de l'infrastructure de recharge de véhicules électriques.

A la fin de ces 3 mois, l'entreprise tire les deux constats suivants :
- Les dépassements de puissance (dépassements de la puissance électrique maximale que l'infrastructure de recharge est capable de délivrer) sont très pénalisants car ces dépassements causent des interruption de la charge des véhicules électriques pendant une durée significative et impactent l'activité métier.
- Les prises de raccordement de fortes puissances (supérieures ou égales à 50kW) sont destinées à des recharges urgentes et doivent permettre une recharge rapide.

L'entreprise identifie donc que les indicateurs les plus pertinents pour caractériser la performance du service de recharge sont les suivants :
- Maximisation de l'utilisation de la puissance mise à disposition par l'infrastructure de recharge de véhicules électriques en fournissant une puissance de charge proportionnelle à la puissance de la prise de raccordement pour chaque véhicule électrique (autrement dit, un utilisateur qui raccorde son véhicule électrique à une prise de raccordement capable de délivrer une forte puissance doit recevoir la puissance affichée),
- Respect des contraintes physiques de l'infrastructure de recharge de véhicules électriques (autrement dit, les dépassements de puissance doivent être évités).

Avant de pouvoir exécuter une simulation avec les différents algorithmes de pilotage disponibles, l'historique des sessions de charge étant peu profond, il est nécessaire de le compléter en réalisant le clustering sur les 3 mois de données d'historiques recueillies.

L'entreprise n'identifie pas de changement dans les besoins en énergie électrique ou dans les habitudes d'arrivée/départ.

Un clustering est réalisé sur les données d'historique , ce qui conduit à identifier les trois groupes (ou « clusters ») suivants :
- Groupe 1 :
   o Contient 50% des véhicules électriques,
   o Heure d'arrivée moyenne : 18h, écart-type associé : 0,9 heures,
   o Heure de départ moyenne : 9h, écart-type associé : 0,5 heures,
   o Besoin en énergie électrique moyen : 30 kWh, écart-type associé : 2,5 kWh,
- Groupe 2 :
   o Contient 30% des véhicules électriques,
   o Heure d'arrivée moyenne : 12h, écart-type associé : 1,1 heures,
   o Heure de départ moyenne : 9h, écart-type associé : 0,5 heures,
   o Besoin en énergie électrique moyen : 15 kWh, écart-type associé : 1 kWh,
- Groupe 3 :
   o Contient 20% des véhicules électriques,
   o Heure d'arrivée moyenne : 17h, écart-type associé : 1,4 heures,
   o Heure de départ moyen : 14h, écart-type associé : 0,6 heures,
   o Besoin en énergie électrique moyen : 20 kWh, écart-type associé : 1,6 kWh.

Pour obtenir des données d'entrée sur une année complète (uniquement sur les jours ouvrés) 190 fichiers additionnels sont générés, correspondant à 190 scénarios d'activité. Les 190 fichiers additionnels viennent compléter les 62 fichiers déjà produits à partir des données d'historique. Chaque fichier additionnel est généré par tirages aléatoires des paramètres du scénario (lois gaussiennes) en respectant les proportions de véhicules électriques dans chaque groupe ainsi que les valeurs moyennes et d'écart-type associées à chaque groupe de véhicules électriques, sur l'ensemble des tirages.

Le simulateur a été paramétré de la manière suivante :
- Caractéristiques techniques de l'infrastructure de recharge de véhicules électriques :
   o Créations de l'ensemble des noeuds de l'infrastructure de recharge de véhicules électriques, avec leurs antécédences,
   o Paramétrages des puissances minimales et maximales (kW) de chaque noeud,
   o Affectation des phases à chaque noeud,
- Paramétrage du simulateur :
   o Sélection des indicateurs de performance pertinents :
      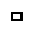 IND#1 : Nombre de dépassements de puissance maximale de l'infrastructure de recharge de véhicules électriques,
      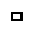 IND#2 : Amplitude moyenne des dépassements (kW),
      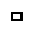 IND#3 : Energie totale chargée pour l'ensemble des véhicules électriques (kWh),
      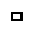 IND#4 : Durée moyenne de la charge complète proportionnelle à la puissance de la prise de raccordement (minutes),
   o Durée du pas de temps de simulation : 5 minutes (la durée du pas de temps choisie résulte d'un compromis entre finesse de la simulation et temps de calcul),
- Sélection des algorithmes de pilotage :
   o L'ensemble des algorithmes de pilotage actuellement disponibles dans la base de données sont sélectionnés :
      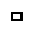 Algo#1 : cet algorithme de pilotage affecte à chaque véhicule électrique la puissance électrique maximale de la prise de raccordement, sans prendre en compte les autres contraintes de l'infrastructure de recharge de véhicules électriques ; cet algorithme de pilotage reproduit le pilotage de l'infrastructure de recharge, observé par l'entreprise durant les 3 mois,
      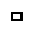 Algo#2 : cet algorithme de pilotage répartit uniformément la puissance électrique disponible entre les véhicules électriques en cours de charge, en prenant en compte les contraintes de l'infrastructure de recharge de véhicules électriques (les contraintes de recharge de l'infrastructure de recharge incluent pour chaque noeud, une puissance électrique maximale pouvant être délivrée par le noeud, et pour chaque prise de raccordement, une puissance électrique minimale devant être délivrée par la prise de raccordement),
      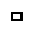 Algo#3 : cet algorithme de pilotage répartit la puissance électrique totale disponible proportionnellement à la puissance des prises de raccordement, tout en respectant les contraintes de l'infrastructure de recharge de véhicules électriques ; cet algorithme intègre une fonction de re-répartition de la puissance électrique non utilisée pour chercher à maximiser la puissance de charge totale délivrée à chaque véhicule électrique,
      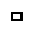 Algo#4 : cet algorithme de pilotage catégorise les véhicules électriques et priorise la charge des véhicules électriques en respectant un niveau de priorité attribué à chaque véhicule électrique, et en respectant les contraintes de l'infrastructure de véhicules électriques,
      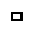 Algo#5 : cet algorithme priorise la charge des véhicules électriques qui sont arrivés le plus tôt dans l'infrastructure de recharge de véhicules électriques, en respectant les contraintes de l'infrastructure de recharge de véhicules électriques ; si un nouveau véhicule électrique ne peut pas être chargé (au risque de violer une contrainte de puissance maximale) l'algorithme de pilotage cherche un véhicule électrique ayant été suffisamment chargé pour le mettre en pause et ainsi libérer de la puissance électrique pour le nouveau véhicule électrique ; ce véhicule électrique est mis définitivement en pause et ne pourra reprendre la charge,
      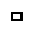 Algo#6 : cet algorithme de pilotage est une amélioration de Algo#5 ; il fonctionne de la même façon mais permet aux véhicules électriques mis en pause de reprendre la charge ultérieurement.

Une fois le paramétrage terminé, la simulation est lancée sur les 252 fichiers, sur un ordinateur standard. La simulation prend environ 1 minute par fichier et l'ensemble des simulations se termine au bout de 4h30 environ.

Pour chaque fichier d'entrée, un fichier de sortie est généré. Le fichier de sortie contient des valeurs des indicateurs de performance qui ont été sélectionnés. A partir de ces 252 fichiers de sortie, la phase d'analyse statistique est exécutée, cette phase prend moins d'une minute.

L'entreprise privilégie la performance à la robustesse et donne un poids nul à cette dernière. Pour chaque algorithme de pilotage, chaque indicateur de performance agrégé est calculé comme une moyenne des 252 valeurs calculées de l'indicateur de performance.

Les résultats obtenus sont les suivants :

| **Algorithme de pilotage** | **IND#1** (nombre) | **IND#2** (kW) | **IND#3** (kWh) | **IND#4** (min) |
|---|---|---|---|---|
| Algo#1 | 13 | 4,5 | 195 | 438 |
| Algo#2 | 0 | 0 | 238 | 160 |
| Algo#3 | 0 | 0 | 262 | 135 |
| Algo#4 | 0 | 0 | 240 | 165 |
| Algo#5 | 0 | 0 | 215 | 230 |
| Algo#6 | 0 | 0 | 235 | 155 |

L'algorithme de pilotage Algo#3 se démarque des autres algorithmes de pilotage sur les 4 indicateurs de performance calculés. L'algorithme de pilotage Algo#3 est sélectionné comme étant le plus pertinent pour l'infrastructure de recharge de véhicules électriques et pour l'activité de l'entreprise.

L'algorithme de pilotage Algo#3 est enregistré dans la mémoire du module de gestion de l'infrastructure de recharge de véhicules automobiles.

Le module de gestion de l'infrastructure de recharge pilote l'infrastructure de recharge de véhicules électrique en exécutant l'algorithme de pilotage sélectionné au cours d'une période d'observation. Comme suite à la période d'observation, l'entreprise identifie les améliorations suivantes, par rapport à l'algorithme de pilotage Algo#1 qui était utilisés auparavant :
- Les véhicules partent en moyenne avec un niveau de charge plus élevé, ce qui augmente l'autonomie des véhicules électriques pour réaliser les activités métier.
- Il n'y a plus de coupures suite à des dépassement de puissance, ce qui contribue à augmenter la charge globale et évite d'obtenir des véhicules électriques très peu chargés et qui n'ont pas l'autonomie nécessaire pour réaliser l'activité métier.
- Les véhicules électriques qui se connectent aux prises 50kW chargent beaucoup plus vite qu'auparavant, ce qui répond au besoin de l'entreprise.

## Revendications

1. Procédé de sélection d'un algorithme de pilotage d'une infrastructure de recharge (1) pour recharger des véhicules électriques, parmi une pluralité d'algorithmes de pilotage prédéfinis,
l'infrastructure de recharge (1) comprenant une pluralité de bornes de recharge (2), chaque borne de recharge (2) étant propre à être raccordée à un véhicule électrique (4, 5, 6) pour délivrer au véhicule électrique une puissance électrique en fonction d'une consigne de puissance électrique attribuée à la borne de recharge (2), chaque algorithme de pilotage étant propre à attribuer à chaque borne de recharge (2), une consigne de puissance électrique à délivrer à chaque véhicule électrique (4) raccordé à la borne de recharge (2) de l'infrastructure de recharge (1),
le procédé comprenant des étapes de :
a - simuler un pilotage de l'infrastructure de recharge (1) selon chacun des algorithmes de pilotage en suivant un même scénario (i) prédéfini d'activité de l'infrastructure de recharge (1) sur une période de temps donnée, le scénario (i) prédéfini d'activité de l'infrastructure de recharge comprenant la recharge d'un ou
de plusieurs véhicules électriques, et pour chaque véhicule électrique une plage horaire de raccordement du véhicule électrique à l'une des bornes de recharge (2) de l'infrastructure de recharge (1) et une valeur d'un besoin en énergie électrique du véhicule électrique,
b - pour chaque algorithme de pilotage, calculer une valeur d'un indicateur de performance (IND#) de l'algorithme de pilotage en fonction d'un résultat de la simulation sur la période de temps donnée,
c - sélectionner l'un des algorithmes de pilotage parmi la pluralité d'algorithmes de pilotage prédéfinis, en fonction des valeurs de l'indicateur de performance calculées pour les différents algorithmes de pilotage.

2. Procédé selon la revendication 1, dans lequel l'indicateur de performance (IND#) est choisi parmi :
- un nombre de dépassements, au cours de la période de temps, d'une puissance électrique maximale que l'infrastructure de recharge est capable de délivrer,
- une amplitude moyenne des dépassements, au cours de la période de temps,
- un taux de véhicules électriques totalement chargés à la fin de la période de temps,
- un taux de véhicules électriques chargés au-delà d'un seuil prédéfini d'état de charge à la fin de la période de temps,
- une quantité d'énergie électrique totale délivrée à l'ensemble des véhicules électriques par les bornes de recharge sur la période de temps,
- une quantité moyenne d'énergie électrique délivrée par véhicule électrique, sur la période de temps,
- un taux de dispersion des quantités d'énergie électrique délivrées aux différents véhicules sur la période de temps,
- un taux de dispersion des états de charges des différents véhicules électriques à la fin de la période de temps,
- une moyenne des durées de recharge complète des véhicules électriques,
- une moyenne pondérée des durées de recharge complète des véhicules électriques, avec des coefficients de pondération, chaque coefficient de pondération étant proportionnel à une puissance d'une prise de raccordement de la borne de recharge à laquelle est raccordé le véhicule électrique,
- un taux d'énergie délivrée aux véhicules électriques, en provenance d'une source d'énergie électrique locale donnée,
- un rapport entre une quantité d'énergie électrique délivrée aux véhicules électriques, en provenance d'une source d'énergie électrique locale donnée, et une quantité totale d'énergie électrique produite par la source d'énergie électrique locale donnée, sur la période de temps
- un nombre d'arrêts de la charge des véhicules au cours de la période de temps.

3. Procédé selon l'une des revendications 1 et 2, dans lequel les étapes a et b sont répétées avec un nouveau scénario prédéfini (i+1) d'activité de l'infrastructure de recharge (1), de manière à obtenir, pour chaque algorithme de pilotage, plusieurs valeurs de l'indicateur de performance.

4. Procédé selon la revendication 3, dans lequel les étapes a et b sont répétées avec un nouveau scénario prédéfini (i+1) d'activité de l'infrastructure de recharge (1) sur une période de temps donnée suivante de même durée que la période de temps donnée précédente.

5. Procédé selon l'une des revendications 3 et 4, comprenant en outre une étape de :
d - pour chaque algorithme de pilotage, déterminer une valeur d'un indicateur de performance agrégé calculée en fonction des valeurs de l'indicateur de performance obtenues en répétant les étapes a et b,
l'étape c comprenant une étape de comparer entre eux les valeurs de l'indicateur de performance agrégé des algorithmes de pilotage, et sélectionner l'algorithme de pilotage en fonction d'un résultat de la comparaison.

6. Procédé selon la revendication 5, dans lequel l'indicateur de performance agrégé est choisi parmi :
- une moyenne des valeurs des indicateurs de performance calculées sur les différentes périodes de temps, et/ou
- un écart-type des valeurs des indicateurs de performance calculées sur les différentes périodes de temps.

7. Procédé selon l'une des revendications 1 à 6, comprenant une étape préalable de :
e - générer une série de N scénarios d'activité de l'infrastructure de recharge,
les étapes a et b étant exécutées N fois, en suivant les scénarios d'activité, de manière à obtenir N valeurs de l'indicateur de performance pour chaque algorithme de pilotage.

8. Procédé selon la revendication 7, dans lequel les N scénarios d'activité de l'infrastructure de recharge sont des scénarios d'activité successifs, chaque i+1 -ième scénario se déroulant sur une période de temps qui suit immédiatement une période de temps sur laquelle se déroule le i-ième scénario qui précède,
les étapes a et b étant exécutées N fois, en suivant les scénarios d'activité successifs, de manière à obtenir les N valeurs de l'indicateur de performance pour chaque algorithme de pilotage.

9. Procédé selon l'une des revendications 7 et 8, dans lequel au cours de l'étape e, chaque scénario d'activité de l'infrastructure est obtenu par tirage aléatoire de paramètres du scénario d'activité.

10. Procédé selon l'une des revendication 7 à 9, comprenant une étape préalable à l'étape e de :
f - à partir de données d'historique de l'infrastructure de recharge, déterminer une valeur moyenne et/ou une valeur d'écart-type des heures d'arrivée des véhicules électriques, une valeur moyenne et/ou une valeur d'écart-type des heures de départ des véhicules électriques, et une valeur moyenne et/ou une valeur d'écart-type des besoins en énergie électrique des véhicules électriques,
et dans lequel au cours de l'étape e, chaque scénario d'activité de l'infrastructure (i) est obtenu par tirage aléatoire de paramètres du scénario d'activité, de manière à respecter les valeurs moyennes et/ou d'écart-type calculées à l'étape f sur l'ensemble des tirages.

11. Procédé selon l'une des revendications 7 à 10, comprenant une étape préalable à l'étape e de :
g - à partir de données d'historique de l'infrastructure de recharge, classer chaque véhicule électrique dans un groupe de véhicules électriques, chaque groupe de véhicules électriques regroupant une pluralité de véhicules électriques, et à chaque groupe étant associé une valeur moyenne et/ou une valeur d'écart-type des heures d'arrivée des véhicules électriques du groupe, une valeur moyenne et/ou une valeur d'écart-type des heures de départ des véhicules électriques du groupe, et une valeur moyenne et/ou une valeur d'écart-type des besoins en énergie électrique des véhicules électriques du groupe,
et dans lequel au cours de l'étape e, chaque scénario d'activité (i) de l'infrastructure de recharge (1) est obtenu par tirage aléatoire de paramètres du scénario d'activité,
de manière à respecter une proportion de véhicules électriques dans chaque groupe ainsi que les valeurs moyennes et/ou d'écart-type calculées à l'étape g associés à chaque groupe de véhicules électriques, sur l'ensemble des tirages.

12. Procédé selon l'une des revendications 1 à 11, dans lequel chaque scénario d'activité (i) de l'infrastructure de recharge (1) comprend en outre pour chaque véhicule électrique, l'un des paramètres suivants :
- un instant d'arrivée du véhicule électrique dans l'infrastructure de recharge,
- un instant de départ du véhicule électrique de l'infrastructure de recharge,
- un état de charge initial du véhicule électrique, au moment du raccordement du véhicule à la borne de recharge,
- une capacité d'une batterie du véhicule électrique,
- une puissance minimale de charge du véhicule électrique,
- une puissance maximale de charge du véhicule électrique,
- un identifiant d'une prise de raccordement à laquelle est raccordé le véhicule électrique,
- un état initial de mode de charge du véhicule électrique au début de la période de temps.

13. Procédé selon l'une des revendications 1 à 12, comprenant une étape de :
h - piloter l'infrastructure de recharge (1) de véhicules électriques en exécutant l'algorithme de pilotage sélectionné à l'étape c.

14. Produit programme d'ordinateur comprenant des instructions de code de programme pour l'exécution des étapes du procédé selon l'une des revendications 1 à 13, lorsque ce programme est exécuté par un ordinateur.

15. Mémoire lisible par ordinateur stockant des instructions exécutables par l'ordinateur pour l'exécution des étapes du procédé selon l'une des revendications 1 à 13.
